# FASCICULE DE BREVET EUROPEEN

(11) **EP 2 691 661 B1**
(45) Date de publication et mention de la délivrance du brevet: **05.11.2014**
(21) Numéro de dépôt: 12705340.3
(22) Date de dépôt: 19.01.2012
(51) Int. Cl.: F16C 1/26, B60N 2/02, B60N 2/06

(54) **GAINE POUR ARBRE ROTATIF FLEXIBLE, DISPOSITIF DE TRANSMISSION D'UN MOUVEMENT DE ROTATION COMPRENANT UNE TELLE GAINE, DISPOSITIF DE REGLAGE D'UN SIEGE AYANT UN TEL DISPOSITIF DE TRANSMISSION DE MOUVEMENT**
HÜLSE FÜR FLEXIBLE RADIALWELLE, VORRICHTUNG ZUR ÜBERTRAGUNG EINER DREHBEWEGUNG MIT EINER SOLCHEN HÜLSE, VORRICHTUNG ZUR EINSTELLUNG EINES KRAFTFAHRZEUGSITZES MIT EINER SOLCHEN BEWEGUNGSÜBERTRAGUNGSSVORRICHTUNG
SHEATH FOR FLEXIBLE ROTARY SHAFT, DEVICE FOR TRANSMITTING A ROTATIONAL MOVEMENT COMPRISING SUCH A SHEATH, DEVICE FOR ADJUSTING A SEAT HAVING SUCH A MOVEMENT TRANSMISSION DEVICE

(30) Priorité: 30.03.2011 FR 1152642
(43) Date de publication de la demande: 05.02.2014
(73) Titulaire: Inderflex - Technoflex, 77820 Le Chatelet en Brie (FR)
(72) Inventeur: TORES, Denis, F-77530 Vaux Le Penil (FR)
(74) Mandataire: Derambure Conseil
(86) Numéro de dépôt international: PCT/FR2012/050112
(87) Numéro de publication internationale: WO 2012/131199

(56) Documents cités:
- DE-A1- 10 200 985
- DE-C1- 19 816 278
- DE-U1- 20 216 127
- GB-A- 1 180 289

## Description

L'invention concerne une gaine pour arbre rotatif flexible, un dispositif de transmission d'un mouvement de rotation comprenant un tel arbre rotatif flexible et une telle gaine, et un dispositif de réglage de la position d'un siège tel qu'un siège de véhicule comprenant un tel dispositif de transmission de mouvement.

On connaît déjà un tel dispositif de transmission d'un mouvement de rotation comprenant un tel arbre et une telle gaine qui est par exemple destiné à l'industrie automobile pour être intégré dans un dispositif motorisé - à commande électrique - de réglage de la position de la position d'un siège de véhicule.

Un tel dispositif de réglage de la position d'un siège de véhicule comprend :
▪ une armature de siège supportée par la structure du véhicule de sorte à pouvoir coulisser le long d'au moins une direction de réglage sur une certaine course de réglage et supportant au moins une roue dentée montée de manière à pouvoir pivoter autour de son tourillon d'axe orthogonal à la direction de réglage et à laquelle est associé, le cas échéant, un réducteur,
▪ au moins une glissière à crans de réglage apte à être fixée à la structure d'un véhicule, parallèlement à la direction de réglage et ayant une longueur au moins égale à la course de réglage, les dents de la roue dentée coopérant avec les crans de la glissière,
▪ au moins un moteur électrique supporté par la structure du véhicule ou l'armature de siège ayant un arbre de sortie apte à pouvoir pivoter, et auquel sont associés des moyens de commande du moteur et du réglage de la position du siège,
▪ un espace libre de forme pouvant être tourmentée, de taille transversale pouvant être très restreinte dans certaines zones, et d'une taille longitudinale pouvant atteindre, voire dépasser, une vingtaine de centimètres, situé entre l'arbre de sortie du moteur électrique et le tourillon de la roue dentée,
▪ au moins un tel dispositif de transmission d'un mouvement de rotation, disposé dans cet espace libre, comprenant un arbre rotatif flexible et une gaine, l'une des extrémités de l'arbre rotatif flexible étant associée fonctionnellement rigidement à l'arbre de sortie du moteur et l'autre des extrémités de l'arbre rotatif flexible étant associée fonctionnellement rigidement au tourillon de la roue dentée, le cas échéant, au réducteur qui lui est associé.

Dans une réalisation, un tel dispositif de réglage de la position d'un siège de véhicule comporte un ensemble à deux glissières à crans de réglage analogues disposées parallèlement en vis-à-vis, deux roues dentées coaxiales, un moteur électrique à deux arbres de sortie ou deux moteurs électriques à un arbre de sortie, et deux dispositifs de transmission d'un mouvement de rotation.

Dans une réalisation, un tel dispositif de réglage de la position d'un siège de véhicule comporte une pluralité de tels dits ensembles à deux glissières, deux roues dentées, un moteur à deux arbres ou deux moteurs à un arbre de sortie, et deux dispositifs de transmission d'un mouvement de rotation, les glissières de la pluralité d'ensembles étant disposées parallèlement à une pluralité de directions de réglage, le dispositif de réglage permettant le réglage de la position d'un siège de véhicule selon plusieurs directions de réglage.

L'espace libre situé entre l'arbre de sortie du moteur électrique et le tourillon de la roue dentée est généralement de forme très tourmentée, de taille transversale pouvant être très restreinte dans certaines zones, et d'une taille longitudinale pouvant atteindre, voire dépasser, une vingtaine de centimètres, compte tenu de la présence des différentes pièces se trouvant dans cette localisation et de la nécessité de laisser certaines zones libres de toute pièce. C'est pour cela que l'arbre rotatif a un parcours sinueux et qu'il doit être flexible, la gaine devant, pour sa part, pouvoir être courbée tout en résistant à la pliure.

A l'une et à l'autre de ses parties d'extrémité, la gaine est pourvue de moyens de fixation sur des moyens de support adaptés extrinsèques à la gaine. D'autre part, il se peut que dans une, ou dans plusieurs, zones axiales, la gaine vienne au contact - ou soit susceptible de venir au contact - d'une, ou de pièces extrinsèques à la gaine se trouvant dans cette localisation.

Selon les réalisations, la gaine peut avoir une longueur hors tout allant jusqu'à avoisiner une trentaine de centimètres, avec un diamètre intérieur de l'ordre de quelques millimètres (par exemple de l'ordre de 4 mm) et un diamètre extérieur de d'ordre du centimètre (par exemple, à l'exception des parties d'extrémité, de l'ordre de 1 à 1,5 cm).

EP-A-1245434 décrit un tel dispositif de transmission d'un mouvement de rotation pour le réglage d'un siège de véhicule automobile, la gaine comprenant un ressort hélicoïdal et un flocage de protection interne. EP-A-1563195 décrit une réalisation dans laquelle l'âme de la gaine comprend une zone formant palier avec une partie centrale et de part et d'autre une partie externe, les deux parties externes étant coaxiales et d'axe décalé par rapport à la partie centrale. EP-A-1957809 décrit une variante avec en outre un tube interne déformable.

EP-A-1544484 décrit une réalisation avec une gaine d'épaisseur variable et de surface intérieure comprenant des ondulations s'étendant longitudinalement. EP-A-1500830 décrit un dispositif de transmission d'un mouvement de rotation pour un siège, dans lequel l'arbre flexible est un câble formé d'un enroulement hélicoïdal de plusieurs fils métalliques, dont la surface externe est usinée de sorte à présenter un état de surface sensiblement lisse. EP-A-1491779 décrit une autre réalisation avec un arbre flexible comprenant au moins un fil d'âme et des fils d'enroulement. FR-A-2863325 décrit une autre réalisation dans laquelle la partie d'extrémité de l'arbre flexible a une géométrie de tronc de pyramide vrillé.

Le document FR-A-2162919 décrit trois réalisations d'une gaine souple pour arbre flexible dans lesquelles il est prévu un tuyau central plissé avec des nervures annulaires et un tube extérieur distinct avec des protubérances. Ainsi, cette gaine n'est pas monobloc, le tuyau central et le tube extérieur présentant d'ailleurs des propriétés propres distinctes. Dans la première réalisation envisagée, le tube extérieur présente des protubérances radiales tout autour du tube, s'étendant axialement d'une extrémité à l'autre. Dans la deuxième réalisation et dans la troisième réalisation, le tube extérieur présente des protubérances annulaires autour du tube, disposées les une à côté des autres, sur toute la longueur du tube.

Les documents DE 202 16 127 U, DE 102 00 985 A et GB 1 180 289 décrivent différentes réalisations d'une gaine souple pour arbre flexible avec des saillies annulaires, cf. préambule de la revendication 1.

Un dispositif de transmission d'un mouvement de rotation comprenant un arbre flexible et une gaine doit satisfaire plusieurs exigences, outre la capacité à être réalisé industriellement de façon économique avec les garanties de qualité attendues.

Une première exigence est de pourvoir être courbé, sans pliure, avec un faible rayon de courbure, par exemple plié à 90° ou de l'ordre de 90° avec un rayon de courbure de l'ordre de 80 mm.

Une deuxième exigence est d'avoir une faculté de réduction des amplitudes de vibration, qu'elles soient directes car générées par la rotation de l'arbre flexible ou indirectes car résultant de la présence des autres organes mécanique environnant, tel que le moteur, les glissières...

Une troisième exigence est d'avoir une capacité d'isolation en cas de contact dans une ou dans plusieurs zones axiales avec une, ou avec des pièces se trouvant dans cette localisation.

Une quatrième exigence est de limiter les contacts entre l'arbre flexible et la gaine et de s'assurer d'une lubrification tout le long du dispositif.

L'invention vise à apporter une solution technique permettant de satisfaire ces exigences.

A cet effet, selon un premier aspect, l'invention a pour objet une gaine monobloc, spécialement destinée à un arbre rotatif flexible, comportant une paroi périphérique continue en, ou à base de, matière plastique, limitant un passage tubulaire avec lequel est apte à coopérer l'arbre rotatif flexible, apte à pouvoir être courbée tout en résistant à la pliure. Cette gaine est telle que la paroi périphérique comprend des tronçons axiaux à protubérance, chacun limité par deux plans transversaux espacés et une face périphérique externe de paroi périphérique.

Cette gaine est telle que qu'un tronçon axial à protubérance comprend une partie centrale de face périphérique externe inscrite dans une enveloppe centrale externe de forme générale au moins sensiblement pseudo-cylindrique, et, en continuité avec ladite partie centrale, des protubérances de la paroi périphérique en continuité mutuelle saillant de l'enveloppe centrale externe, et incluant :
▪ une protubérance annulaire localisée axialement, ou deux protubérances annulaires localisées axialement, située vers l'un des, ou situées sur chacun des, deux plans transversaux, et
▪ au moins une protubérance radiale et axiale inscrite dans une enveloppe extérieure, s'étendant en direction générale axiale et dans un plan radial, et éventuellement à proximité de ce plan radial.

Selon une réalisation, une protubérance annulaire localisée axialement s'étend sur une longueur axiale inférieure à 0,15 fois, plus particulièrement inférieur à 0,15 fois, plus particulièrement inférieure à 0,1 fois, plus particulièrement égale ou de l'ordre de 0,08 fois, la longueur axiale du tronçon à protubérance radiale et axiale,

Selon une réalisation, une protubérance annulaire localisée axialement est adjacente à l'un desdits plans transversaux.

Selon une réalisation, une protubérance annulaire localisée axialement et une protubérance radiale et axiale saillent radialement de l'enveloppe centrale externe sur une même distance ou sur des distances voisines.

Selon une réalisation, une protubérance radiale et axiale est située dans et limitée à un secteur de l'enveloppe centrale externe qui comprend le plan radial, n'étant pas annulaire, ledit secteur ayant une ouverture d'angle inférieure à 45°, plus particulièrement inférieure à 30°.

Selon une réalisation, une protubérance, radiale et axiale considérée dans un plan transversal a une forme générale au moins sensiblement pseudo-triangulaire, plus particulièrement au moins pseudo-triangulaire équilatérale, avec un côté interne vers l'enveloppe centrale externe et un somment externe opposé au côté interne, formant un bord extérieur, plus particulièrement le bord le plus extérieur, de la face extérieure de la paroi périphérique du tronçon à protubérance radiale et axiale.

Selon une réalisation, une protubérance radiale et axiale considérée dans un plan transversal a une forme générale au moins sensiblement pseudo-triangulaire avec deux côtés externes arrondis, plus particulièrement concaves, et/ou avec des sommets arrondis, plus particulièrement un sommet externe concave et des sommets internes convexes de raccordement tangentiel avec la partie centrale concave de la face externe de la paroi périphérique du tronçon à protubérance radiale et axiale.

Selon une réalisation, une protubérance radiale et axiale s'étend en direction générale axiale de façon continue.

Selon une réalisation, une protubérance radiale et axiale s'étend en direction générale axiale sans saillir ou être en retrait de l'un et/ou de l'autre des deux dits plans transversaux et d'une protubérance annulaire localisée axialement.

Selon une réalisation, un tronçon à protubérance radiale et axiale comporte au moins deux, plus particulièrement trois ou au moins trois, protubérances radiales et axiales analogues, plus particulièrement identiques ou sensiblement identiques, dans au moins deux, plus particulièrement en trois ou au moins trois, plans radiaux régulièrement écartés angulairement les uns des autres ou au moins sensiblement régulièrement écartés angulairement les unes des autres.

Selon une réalisation, au moins certains des tronçons à protubérance radiale et axiale, plus particulièrement tous les tronçons à protubérance radiale et axiale, sont analogues, plus particulièrement sont identiques ou sensiblement identiques, si ce n'est leur orientation angulaire autour de l'axe de la gaine.

Selon une réalisation, au moins deux tronçons à protubérance radiale et axiale, plus particulièrement tous les tronçons à protubérance radiale et axiale ou une partie substantielle d'entre eux, sont voisins l'un de l'autre ou les uns des autres de sorte à être au moins sensiblement adjacents, plus particulièrement de sorte à être attenants de façon continue.

Selon une réalisation, deux tronçons à protubérance radiale et axiale voisins, plus particulièrement attenants, sont disposés par rapport à l'axe de la gaine avec deux orientations décalées angulairement, de sorte que leurs protubérances radiales et axiales soient décalées angulairement, une protubérance radiale et axiale d'un tronçon à protubérance radiale et axiale étant située en regard de la zone médiane entre deux protubérances radiales et axiales du tronçon à protubérance radiale et axiale voisin, plus particulièrement attenant.

Selon une réalisation, le diamètre de l'enveloppe centrale externe est compris entre deux et trois fois, plus particulièrement est de l'ordre de 2,3 à 2,5 fois, le diamètre de l'enveloppe interne de la face interne de la paroi périphérique ou de l'enveloppe externe du passage tubulaire. Une protubérance radiale et axiale saille de l'enveloppe centrale externe d'une distance comprise entre 0,4 et 0,6 fois le rayon de l'enveloppe centrale externe, plus particulièrement est de l'ordre de 0,5 fois le rayon de l'enveloppe centrale externe et/ou d'une distance égale ou voisine du rayon de l'enveloppe externe du passage tubulaire. Un tronçon à protubérance radiale et axiale a une longueur axiale comprise entre 1 fois et 1,5 fois, le diamètre de l'enveloppe centrale externe. Selon une réalisation, la gaine comporte un tronçon à protubérance radiale et axiale par centimètre de longueur axiale de gaine, ou de l'ordre du centimètre de longueur axiale de gaine.

Selon une réalisation, la paroi périphérique comprend également au moins dans la, ou dans les, zones axiales de la gaine pouvant être au contact d'une ou de pièces extrinsèques à la gaine, au moins un tronçon à aile annulaire, limité par deux plans transversaux et une face périphérique externe comprenant :
■ une partie centrale inscrite dans une enveloppe centrale externe de forme générale au moins sensiblement pseudo-cylindrique,
▪ et au moins une aile annulaire localisée axialement, plus particulièrement une pluralité d'ailes, saillant de l'enveloppe centrale externe et qui, considérée dans un plan transversal, a une forme annulaire, la ou les ailes annulaires étant inscrites dans une enveloppe extérieure.

Selon une réalisation, l'enveloppe centrale externe du tronçon à aile annulaire et l'enveloppe centrale externe du tronçon à protubérance radiale et axiale sont au moins sensiblement dans le prolongement l'une de l'autre et/ou l'enveloppe extérieure du tronçon à aile annulaire et l'enveloppe extérieure du tronçon à protubérance radiale et axiale sont au moins sensiblement dans le prolongement l'une de l'autre.

Selon une réalisation, un tronçon à aile annulaire et un tronçon de gaine à partie protubérance radiale et axiale sont voisins l'un de l'autre de sorte à être au moins sensiblement adjacents, plus particulièrement de sorte à être attenants de façon continue.

Selon une réalisation, un tronçon à aile annulaire a une longueur axiale de l'ordre d'une à trois fois la longueur axiale d'un tronçon à protubérance radiale et axiale.

Selon une réalisation, un tronçon à aile annulaire est localisé au moins dans la zone médiane de la gaine entre ses parties d'extrémité.

Selon une réalisation, la gaine comporte des tronçons à protubérance radiale et axiale, et le cas échéant un ou plusieurs tronçons à aile annulaire, sur toute sa longueur axiale ou sur une partie substantielle de sa longueur axiale, à l'exception le cas échéant de l'une et/ou de l'autre de ses deux parties d'extrémité.

Selon une réalisation, une protubérance radiale et axiale, et/ou une protubérance annulaire, et/ou une aile annulaire est pleine et formée par la matière de la paroi périphérique.

Selon une réalisation, la gaine comporte à l'une et/ou à l'autre de ses parties d'extrémité des moyens de fixation sur des moyens de supports extrinsèques à la gaine.

Selon une réalisation, la face interne de la paroi périphérique délimitant le passage tubulaire est pourvue d'une ou de plusieurs saillies et/ou d'une ou de plusieurs rainures s'étendant en direction générale axiale, annulaire, hélicoïdale.

Selon une réalisation, la face interne de la paroi périphérique délimitant le passage tubulaire est soit lisse soit pourvue de reliefs localisés en saillie ou en creux.

Selon un deuxième aspect, l'invention a pour objet un dispositif de transmission d'un mouvement de rotation comprenant un arbre rotatif flexible coopérant avec une gaine telle qu'elle a été précédemment décrite.

Selon un troisième aspect, l'invention a pour objet un dispositif de réglage de la position d'un siège, plus particulièrement un siège de véhicule, comprenant :
▪ une armature de siège supportée par une structure de sorte à pouvoir coulisser le long d'au moins une direction de réglage sur une certaine course de réglage et supportant au moins une roue dentée montée de manière à pouvoir pivoter autour de son tourillon d'axe orthogonal à la direction de réglage et à laquelle est associé, le cas échéant, un réducteur,
▪ au moins une glissière à crans de réglage apte à être fixée à la structure, parallèlement à la direction de réglage et ayant une longueur au moins égale à la course de réglage, les dents de la roue dentée coopérant avec les crans de la glissière,
▪ au moins un moteur électrique supporté par la structure ou l'armature de siège ayant un arbre de sortie apte à pouvoir pivoter, et auquel sont associés des moyens de commande du moteur et du réglage de la position du siège,
▪ un espace libre de forme pouvant être tourmentée, de taille transversale pouvant être très restreinte dans certaines zones, et d'une taille longitudinale pouvant atteindre, voire dépasser, une vingtaine de centimètres, situé entre l'arbre de sortie du moteur électrique et le tourillon de la roue dentée,
▪ au moins un tel dispositif de transmission d'un mouvement de rotation, disposé dans cet espace libre, comprenant un arbre rotatif flexible et une gaine selon la revendication 14, l'une des extrémités de l'arbre rotatif flexible étant associée fonctionnellement rigidement à l'arbre de sortie du moteur et l'autre des extrémités de l'arbre rotatif flexible étant associée fonctionnellement rigidement au tourillon de la roue dentée, le cas échéant, au réducteur qui lui est associé.

Selon une réalisation, le dispositif de réglage de la position d'un siège comporte un ensemble à deux glissières à crans de réglage analogues disposées parallèlement en vis-à-vis, deux roues dentées coaxiales, un moteur électrique à deux arbres de sortie ou deux moteurs électriques à un arbre de sortie, et deux dispositifs de transmission d'un mouvement de rotation.

Selon une réalisation, le dispositif de réglage de la position d'un siège comporte une pluralité d'ensembles à deux glissières, deux roues dentées, un moteur à deux arbres ou deux moteurs à un arbre de sortie, et deux dispositifs de transmission d'un mouvement de rotation, les glissières de la pluralité d'ensembles étant disposées parallèlement à une pluralité de directions de réglage, le dispositif de réglage permettant le réglage de la position d'un siège selon plusieurs directions de réglage.

On décrit maintenant plusieurs modes de réalisation possible de l'invention à l'aide des dessins annexés, à savoir :
- La figure 1 est une vue en perspective d'une première variante de réalisation d'une gaine pour dispositif de transmission d'un mouvement de rotation, la gaine étant ici représentée rectiligne, sans courbure, avec une pluralité d'une quinzaine de tronçons axiaux de gaine à protubérance radiale et axiale adjacents les uns aux autres sur toute la longueur axiale de la gaine à l'exception de ses deux parties d'extrémité.
- La figure 2 est une vue en élévation de la gaine représentée sur la figure 1.
- La figure 3 est une vue en coupe longitudinale axiale de la gaine représentée sur la figure 2, selon la ligne de coupe III-III.

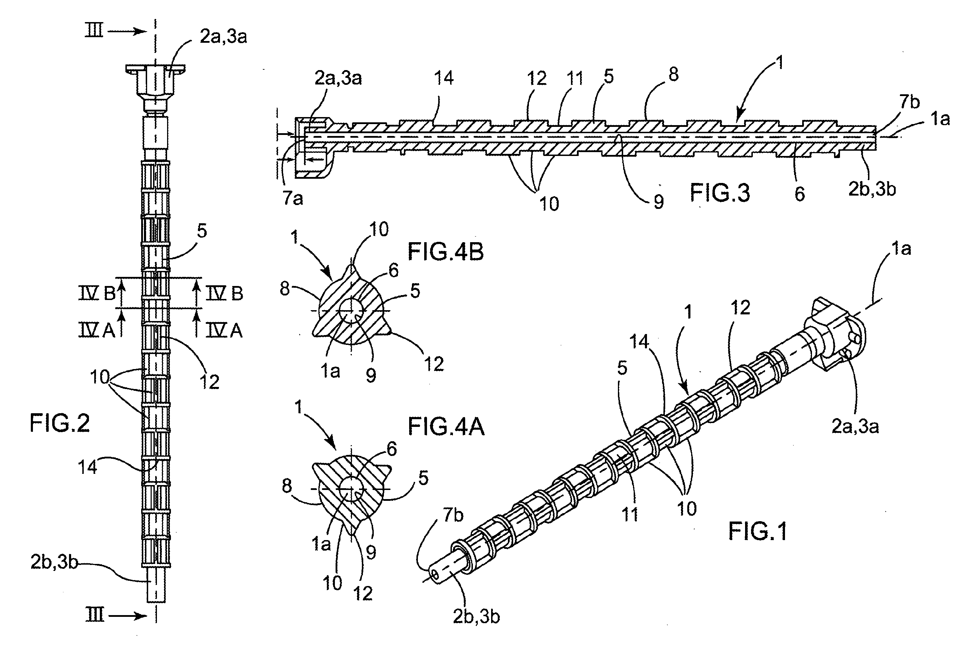

- Les figures 4A et 4B sont deux vues en coupe transversale de la gaine représentée sur la figure 2, selon les lignes de coupe IVA-IVA et IVB-IVB, respectivement, dans deux tronçons à protubérance radiale et axiale adjacents, chaque tronçon comportant trois protubérances localisées identiques dans trois localisations régulièrement écartées angulairement les unes des autres, chaque protubérance radiale et axiale considérée dans un plan transversal ayant une forme générale triangulaire équilatérale, avec un somment externe formant le bord le plus extérieur de la gaine, deux côtés distaux arrondis, ici concaves, et des sommets arrondis, les protubérances s'étendant en direction générale axiale de façon continue jusqu'à l'un et l'autre des deux plans transversaux limitant le tronçon à protubérance radiale et axiale, la protubérance radiale et axiale d'un tronçon étant située en regard de la zone médiane entre deux protubérances axiales et radiales du tronçon adjacent.
- La figure 5 est une vue en coupe transversale à plus grande échelle de la gaine illustrant deux tronçons à protubérance radiale et axiale.
- La figure 6 est une vue en élévation à plus grande échelle, partielle, deux tronçons à protubérance radiale et axiale, tels que représentés sur la figure 5.
- La figure 7 est une vue en élévation d'une seconde variante de réalisation d'une gaine comportant également un tronçon de gaine à aile annulaire localisée annulaire dans sa partie médiane, entre des tronçons à protubérance radiale et axiale.
- La figure 8 est une vue en coupe longitudinale axiale de la gaine représentée sur la figure 5, selon la ligne de coupe VIII-VIII.
- La figure 9 est un agrandissement partiel de la zone de la gaine où se trouve un tronçon de gaine à aile annulaire.
- Les figures 10A et 10B sont deux vues en coupe transversale de la gaine représentée sur la figure 7, selon les lignes de coupe IXA-IXA et IXB-IXB, respectivement, dans deux tronçons à protubérance radiale et axiale adjacents.

Un dispositif de transmission d'un mouvement de rotation selon l'invention comprend un arbre rotatif flexible non représenté sur les figures, coopérant avec une gaine 1 spécialement destinée à cette fin, de sorte à saillir de ses parties d'extrémité 2a et 2b.

Par « gaine », l'on entend une forme générale d'anneau cylindrique dont l'axe 1a peut avoir une forme quelconque, à savoir une forme rectiligne comme représenté sur les figures, ou, plus généralement et typiquement une forme incurvée plus ou moins tourmentée, à l'instar de la gaine 1.

Un tel dispositif de transmission d'un mouvement de rotation est par exemple destiné à l'industrie automobile pour la motorisation - à commande électrique - d'un siège de véhicule, étant incorporé dans un dispositif de réglage de la position d'un siège de véhicule.

Un tel dispositif de réglage de la position d'un siège de véhicule comprend en premier lieu une armature de siège supportée par la structure du véhicule de sorte à pouvoir coulisser le long d'au moins une direction de réglage sur une certaine course de réglage. Cette armature de siège supportant une - et typiquement deux - roue dentée montée de manière à pouvoir pivoter autour de son tourillon d'axe orthogonal à la direction de réglage. A la roue dentée peut être associé, le cas échéant, un réducteur.

Le dispositif de réglage de la position d'un siège de véhicule comprend en deuxième lieu une - et typiquement deux - glissière à crans de réglage apte à être fixée à la structure du véhicule, parallèlement à la direction de réglage. Une telle glissière a une longueur au moins égale à la course de réglage. Ses crans sont aptes à coopérer avec les dents de la roue dentée. Les deux glissières sont identiques et disposées parallèlement en vis-à-vis, les deux roues dentées étant coaxiales.

Le dispositif de réglage de la position d'un siège de véhicule comprend en troisième lieu un moteur électrique supporté par la structure du véhicule ou l'armature de siège. Un tel moteur comporte un arbre de sortie apte à pouvoir pivoter et auquel sont associés des moyens de commande du moteur et du réglage de la position du siège, Selon les réalisations - et dans la mesure où le dispositif de réglage de la position d'un siège de véhicule comprend un ensemble à deux glissières à crans de réglage et à deux roues dentées -il est prévu un moteur électrique à deux arbres de sortie ou deux moteurs électriques à un arbre de sortie.

Le dispositif de réglage de la position d'un siège de véhicule comprend en quatrième lieu un - et typiquement deux - espace libre de forme plus ou moins tourmentée, de taille transversale pouvant être très restreinte dans certaines zones, et d'une taille longitudinale pouvant atteindre, voire dépasser, une vingtaine de centimètres. Un tel espace est situé entre l'arbre de sortie du moteur et le tourillon de la roue dentée.

Le dispositif de réglage de la position d'un siège de véhicule comprend en cinquième lieu un - et typiquement deux - dispositif de transmission d'un mouvement de rotation, disposé dans ledit espace libre. L'une des extrémités de l'arbre rotatif flexible est associée fonctionnellement rigidement à l'arbre de sortie du moteur et l'autre des extrémités de l'arbre rotatif flexible est associée fonctionnellement rigidement au tourillon de la roue dentée, ou le cas échéant, au réducteur qui lui est associé.

Selon des variantes, le dispositif de réglage de la position d'un siège de véhicule comporte une pluralité d'ensembles à glissière, roue dentée, moteur, et dispositif de transmission d'un mouvement de rotation. Et les glissières de ladite pluralité d'ensembles sont disposées parallèlement à une pluralité de directions de réglage. Ainsi, le dispositif de réglage permet le réglage de la position d'un siège de véhicule selon plusieurs directions de réglage.

L'application au réglage de la position d'un siège de véhicule est donnée à titre exemplatif et nullement limitatif. L'invention peut également s'appliquer à un siège qui n'est pas destiné à un véhicule. Plus généralement, l'invention peut également s'appliquer au réglage de la position d'une pièce, d'un ensemble ou d'un dispositif présentant des caractéristiques en ce qui concerne de réglage de position plus ou moins analogues à celles d'un siège de véhicule.

Compte tenu de l'encombrement des différents systèmes, dispositifs, pièces et organes du siège et autour de lui et compte tenu de la nécessité de laisser certaines zones libres de tout système, dispositif, pièce et organe, l'arbre rotatif a un parcours sinueux, raison pour laquelle il est flexible, la gaine 1, pour sa part, devant pouvoir pouvant être courbée tout en résistant à la pliure.

A l'une et à l'autre de ses parties d'extrémité 2a et 2b, la gaine 1 est pourvue de moyens de fixation 3a et 3b, respectivement, sur des moyens de support adaptés extrinsèques à la gaine 1, par exemple situés respectivement vers le moteur et vers la glissière du dispositif de réglage de la position du siège de véhicule.

D'autre part, il se peut que dans une - ou dans plusieurs, zone axiale 4 - la gaine 1 vienne au contact - ou soit susceptible de venir au contact - d'une ou de plusieurs pièces extrinsèques à la gaine 1 se trouvant dans cette localisation.

La gaine 1 comporte une paroi périphérique 5, continue, limitant un passage tubulaire 6 traversant, d'axe au moins sensiblement confondu avec l'axe 1 a, ayant deux ouvertures 7a et 7b, respectivement, aux deux parties d'extrémité 2a et 2b de la gaine 1. La paroi périphérique 5 présente une face externe 8 et une face interne 9 délimitant le passage tubulaire 6. L'arbre rotatif flexible est apte à coopérer avec le passage tubulaire 6 et à saillir de part et d'autre de la gaine 1 par les deux ouvertures 7a et 7b.

Par « axial », l'on entend ce qui s'étend le long de ou sensiblement le long de, ou dans la direction de ou sensiblement dans la direction de, ou parallèlement à ou sensiblement parallèlement à l'axe 1 a.
Par « transversal », l'on entend ce qui est dans ou sensiblement dans, ou se trouve dans ou sensiblement dans, ou s'étend dans ou sensiblement dans un plan perpendiculaire à l'axe 1a.
Par « radial », l'on entend ce qui s'étend le long d'une ou sensiblement le long d'une direction transversale passant par l'axe 1a.
Par « annulaire », l'on entend ce qui a une forme annulaire ou une forme pseudo-annulaire d'axe 1a.
Par « hélicoïde », l'on entend ce qui a une forme hélicoïde ou une forme pseudo- hélicoïde d'axe 1a.
Par « interne », l'on entend ce qui est le plus proche de, ou le plus tourné vers, l'axe 1a.
Par « externe », l'on entend ce qui est le plus éloigné, ou le plus tourné à l'opposé de l'axe 1 a.
Par « extérieur», l'on entend ce qui est sur le pourtour de la gaine 1.

La face interne 9 de la paroi périphérique 5 délimitant le passage tubulaire 6, ou son enveloppe interne 9a, est complémentaire de la face externe de l'arbre rotatif flexible, ou de son enveloppe externe, aux jeux nécessaires près, de sorte à permettre une rotation convenable et sans gêne de l'arbre rotatif flexible dans la paroi périphérique 5, même dans le cas où la gaine 1 et donc l'arbre rotatif flexible est courbé, sans pliure, avec un faible rayon de courbure, par exemple plié à 90° ou de l'ordre de 90° avec un rayon de courbure de l'ordre de 80 mm.

Selon une réalisation possible, non représentée, la face interne 9 de la paroi périphérique 5 est pourvue d'une ou de plusieurs saillies et/ou d'une ou de plusieurs rainures s'étendant en direction générale axiale, annulaire, hélicoïde.

Selon une réalisation possible, non représentée, la face interne 9 de la paroi périphérique 5 est soit lisse soit pourvue de reliefs localisés en saillie ou en creux.

La gaine 1, notamment sa paroi périphérique 5, est monobloc, en une seule pièce. Elle est réalisée en matière plastique, telle que le PVC. Elle est au moins sensiblement homogène, ce qui signifie que la gaine 1, notamment sa paroi périphérique 5, peut être mono matière, dans ses différentes parties. Toutefois, cela n'interdit pas, par exemple, de prévoir que la gaine 1 comporte un moyen inséré et noyé, plus spécialement dans la paroi périphérique 5, localisé ou au contraire s'étendant d'une extrémité à l'autre de la gaine 1. Cela n'interdit pas non plus de prévoir que la gaine 1 comporte un moyen de couverture total ou partiel rapporté ou intégré à la face externe 8 et/ou à la face interne 9. Cela n'interdit pas non plus de prévoir que la gaine 1, plus particulièrement la paroi périphérique 5, comporte un moyen fonctionnel autre, apportant telle ou telle propriété souhaitée, notamment mécanique.

L'arbre rotatif flexible ne fait pas en soi l'objet de l'invention. La structure et la réalisation d'un tel arbre rotatif flexible sont connues ou à la portée de l'homme du métier, raison pour laquelle elles ne sont pas davantage décrites. Par exemple, un tel arbre rotatif flexible est un câble formé de fils métalliques : un fil d'âme et un enroulement hélicoïdal de plusieurs fils.

Selon les réalisations, la gaine 1 peut avoir une longueur hors tout allant jusqu'à avoisiner une trentaine de centimètres. Son diamètre interne - diamètre externe du passage 7 - peut être de l'ordre de quelques millimètres, par exemple de l'ordre de 4 mm. Son diamètre extérieur peut être de d'ordre du centimètre, par exemple, à l'exception des parties d'extrémité 2a et 2b, de l'ordre de 1 cm à 1,5 cm. Ces dimensions sont données à titre exemplatif et illustratif et ne sont pas limitatives.

On se réfère maintenant plus spécialement à une première réalisation qui peut faire l'objet d'une variante d'exécution représentée sur les figures 1 à 6.

Dans cette variante d'exécution de la première réalisation, la paroi périphérique 5 comprend une pluralité de tronçons à protubérance radiale et axiale 10, chacun limité par deux plans transversaux Pa et Pb et une face périphérique externe 13. Un tel tronçon 10 s'étend en direction axiale.

Dans la variante d'exécution représentée, la gaine 1 comprend une pluralité de tronçons à protubérance radiale et axiale 10 sur toute sa longueur axiale à l'exception de l'une et de l'autre de ses deux parties d'extrémité 2a et 2b. Toutefois, cette exécution n'est qu'exemplative, dans la mesure où plus généralement la gaine 1 comprend une pluralité de tronçons à protubérance radiale et axiale 10 sur une partie seulement de sa longueur axiale, plus particulièrement une partie substantielle, et au moins dans la, ou dans les, zones axiales de la gaine 1 devant être plus spécialement aptes à pouvoir être courbées tout en résistant à la pliure,

Dans la variante d'exécution représentée, tous les tronçons à protubérance radiale et axiale 10 sont identiques, si ce n'est leur orientation angulaire autour de l'axe 1a, comme il sera décrit. Toutefois, cette exécution n'est qu'exemplative, dans la mesure où plus généralement seulement au moins certains des tronçons à protubérance radiale et axiale sont seulement analogues.

Dans la variante d'exécution représentée, tous les tronçons à protubérance radiale et axiale 10 sont voisins les uns des autres de sorte à être attenants de façon continue. Les plans transversaux Pa et Pb sont donc virtuels et ne correspondent pas à des plans d'extrémité libres. Toutefois, cette exécution n'est qu'exemplative, dans la mesure où plus généralement, seulement au moins deux tronçons à protubérance radiale et axiale 10 ou seulement une partie substantielle de la pluralité de tronçons à protubérance radiale et axiale 10 sont seulement voisins l'un de l'autre ou les uns des autres de sorte à être au moins sensiblement adjacents.

De façon générale, un tronçon à protubérance radiale et axiale (10) comprend une partie centrale 11 de face périphérique externe 13 inscrite dans une enveloppe centrale externe 11 a et, en continuité avec ladite partie centrale 11, des protubérances 14, 12 de la paroi périphérique 5 en continuité mutuelle saillant de l'enveloppe centrale externe 11a.

Ces protubérances de la paroi périphérique 5 en continuité mutuelle saillant de l'enveloppe centrale externe 11a sont en premier lieu une protubérance annulaire localisée axialement 14, ou deux protubérances annulaires localisées axialement 14, située vers l'un des, ou situées sur chacun des, deux plans transversaux Pa, Pb.

Ces protubérances de la paroi périphérique 5 en continuité mutuelle saillant de l'enveloppe centrale externe 11a sont en second lieu au moins une protubérance radiale et axiale 12 inscrite dans une enveloppe extérieure 13, s'étendant en direction générale axiale et dans un plan radial Pa, Pb.

L'enveloppe centrale externe 11a est de forme cylindrique à base circulaire. Toutefois, cette exécution n'est qu'exemplative, dans la mesure où plus généralement la partie centrale 11 peut s'inscrire dans une enveloppe centrale externe 11a de forme au moins sensiblement pseudo-cylindrique à base autre que circulaire.

Par le qualificatif de « central » appliqué à la partie centrale 11, l'on entend que la partie 11 est celle qui permet de grouper les autres parties constitutives du tronçon à protubérance radiale et axiale 10 situées à la périphérie externe de la partie centrale 11. Par le qualificatif de « central » appliqué à l'enveloppe 11a, l'on entend que l'enveloppe 11a appartient à la partie centrale 11. Par « enveloppe 11a », l'on désigne la surface minimale qui limite du côté externe la partie centrale 11. Cette enveloppe 11a est pour partie réelle, formant une partie de la face extérieure de la partie centrale 11 et du tronçon à protubérance radiale et axiale 10. Elle est pour partie imaginaire là où le tronçon à protubérance radiale et axiale 10 comporte d'autres parties constitutives situées à la périphérie externe de la partie centrale 11.

Dans la variante d'exécution représentée, il est prévu trois protubérances radiales et axiales 12 identiques situées en trois localisations autour de l'enveloppe centrale externe 11 a régulièrement écartées angulairement les unes des autres. Toutefois, cette exécution n'est qu'exemplative, dans la mesure où plus généralement un tronçon à protubérance radiale et axiale 10 peut comporter un nombre différent de protubérances radiales et axiales 12, allant de une, deux, trois comme représenté, ou davantage. Mais également dans la mesure où les protubérances radiales et axiales 10 ne sont pas identiques ou sensiblement identiques mais seulement analogues. Dans la mesure où les localisations autour de l'enveloppe centrale externe 11a où sont les protubérances radiales et axiales 10 ne sont que au moins sensiblement régulièrement écartées angulairement les unes des autres.

Dans la variante d'exécution représentée, la protubérance radiale et axiale 12 s'étend en direction générale axiale parallèlement à l'axe 1 a. D'autre part, elle saille de l'enveloppe centrale externe 11a, vers l'externe.

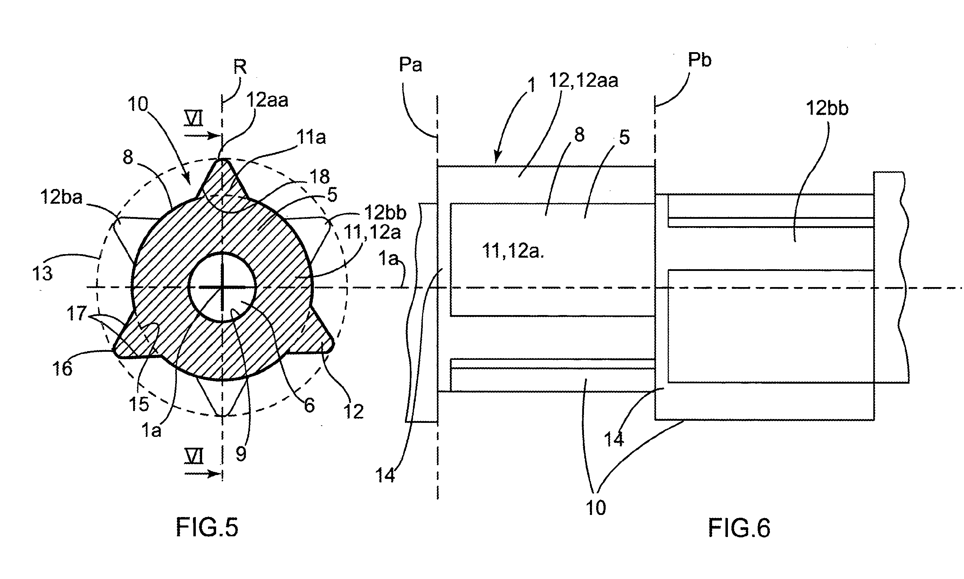

Si l'on considère la protubérance radiale et axiale 12 dans un plan transversal, comme le plan des figures 4A, 4B et 5, la protubérance radiale et axiale 12 est située dans un plan radial R du tronçon à protubérance radiale et axiale 10 ainsi qu'hors de ce plan radial R, mais à proximité de lui. Toutefois, cette exécution n'est qu'exemplative, dans la mesure où plus généralement la protubérance radiale et axiale 12 peut n'être que située dans le plan radial R. Dans tous les cas, la ou les protubérances radiales et axiales 12 s'inscrivent dans une enveloppe extérieure 13. Par « enveloppe 13 », l'on désigne la surface minimale qui limite du côté externe la ou les protubérances radiales et axiales 12.

Par le qualificatif de « à proximité » appliqué au plan radial R, l'on entend que la protubérance radiale et axiale 12 est située dans et limitée à un secteur de l'enveloppe centrale externe 11a qui comprend le plan radial R et qui a une ouverture d'angle (comptée à partir de l'axe 1a) qui est inférieure à 45° et plus particulièrement inférieure à 30°. Ainsi, il est entendu que la protubérance radiale et axiale 12 n'est pas annulaire.

Dans la variante d'exécution représentée, la face périphérique externe 10a comprend ensuite une protubérance annulaire localisée axialement 14 adjacente à l'un des deux plans transversaux Pa, Pb. Toutefois, cette exécution n'est qu'exemplative, dans la mesure où plus généralement il peut ne pas être prévu une telle protubérance annulaire localisée axialement 14 ou, si elle est prévue, elle peut être unique ou il peut y en avoir plusieurs, ou encore elle peut être localisée sur le tronçon à protubérance radiale et axiale 10 autrement qu'adjacente à l'un des plans Pa, Pb.

Par le qualificatif de « localisée axialement» appliqué à la protubérance annulaire 14, l'on entend que la protubérance annulaire 14 a une longueur axiale faible, et en particulier très faible, par rapport à la longueur axiale du tronçon à protubérance radiale et axiale 10, entre les plans Pa et Pb. Ainsi, selon des réalisations possibles, la protubérance annulaire localisée axialement 14 s'étend sur une longueur axiale inférieure à 0,15 fois, plus particulièrement inférieure à 0,1 fois, plus particulièrement égal ou de l'ordre de 0,08 fois, la longueur axiale du tronçon à protubérance radiale et axiale 10, Ces dimensions sont données à titre exemplatif et illustratif et ne sont pas limitatives.

Dans la variante d'exécution représentée, la protubérance annulaire localisée axialement 14 et les protubérances radiales et axiales 12 sont en continuité et plus particulièrement saillent de l'enveloppe centrale externe 11a sur une même distance. Toutefois, cette exécution n'est qu'exemplative, dans la mesure où plus généralement, et par exemple, les protubérances 12 et 14 saillent sur des distances différentes ou seulement voisines.

Dans la variante d'exécution représentée (voir plus particulièrement la figure 5), la protubérance radiale et axiale 12, considérée dans un plan transversal (plan de la figure 5), a une forme triangulaire équilatérale. Cette forme triangulaire équilatérale comprend un côté interne15 vers l'enveloppe centrale externe 11 a. Elle comprend un sommet externe 16 opposé au côté interne 15 et formant un bord le plus extérieur de la face externe 9 de la paroi périphérique 5, notamment fait partie de l'enveloppe extérieure 13. Toutefois, cette exécution n'est qu'exemplative, dans la mesure où plus généralement la protubérance radiale et axiale 12 peut n'avoir qu'une forme générale au moins sensiblement pseudo-triangulaire.

Dans la variante d'exécution représentée (voir plus particulièrement la figure 5), la protubérance radiale et axiale 12, considérée dans un plan transversal (plan de la figure 5), a une forme triangulaire, ou une forme générale au moins sensiblement pseudo-triangulaire comme précédemment indiqué, avec deux côtés externes 17 arrondis, avec un sommet externe 16 et deux sommets internes 18 arrondis. Par exemple, les deux côtés externes 17 sont légèrement concaves, le sommet externe 16 concave et les sommets internes 18 convexes, ce qui permet un raccordement au moins sensiblement tangentiel avec la partie centrale 11 concave. Toutefois, cette exécution n'est qu'exemplative.

Dans la variante d'exécution représentée (voir plus particulièrement la figure 5), la protubérance radiale et axiale 12 s'étend en direction générale axiale parallèlement à l'axe 1a, de façon continue jusqu'à l'un et l'autre des deux plans Pa et Pb et la protubérance annulaire localisée axialement 14 elle-même adjacente à l'un de ces deux plans. Dans cette exécution, la protubérance radiale et axiale 12 s'étend en direction axiale sans saillir ou être en retrait de l'un et/ou de l'autre des deux plans Pa et Pb. Toutefois, cette exécution n'est qu'exemplative dans la mesure où la protubérance radiale et axiale 12 peut s'étendre jusqu'à l'un seulement des plans Pa et Pb ou peut s'étendre au moins sensiblement jusqu'à l'un et/ou l'autre des plans Pa et Pb, ou encore dans la mesure où il n'y a pas de protubérance annulaire localisée axialement telle que la protubérance 14.

Dans la variante d'exécution représentée (voir plus particulièrement les figures 5 et 6, deux tronçons à protubérance radiale et axiale 10 attenants sont disposés par rapport à l'axe 1a avec deux orientations décalées angulairement. Ainsi, leurs protubérances radiales et axiales 12 respectives sont également décalées angulairement. Comme cela est représenté sur la figure 5, une protubérance radiale et axiale 12aa d'un tronçon à protubérance radiale et axiale 10 est située en regard de la zone médiane entre deux protubérances radiales et axiales 12ba et 12bb du tronçon à protubérance radiale et axiale 10 attenant. Toutefois, cette exécution n'est qu'exemplative dans la mesure où le décalage angulaire entre deux tronçons à protubérance radiale et axiale 10 attenants peut être différent.

Selon des réalisations correspondant à l'exécution représentée, le diamètre de l'enveloppe centrale externe 11a est compris entre deux et trois fois, plus particulièrement est de l'ordre de 2,3 à 2,5 fois, le diamètre de l'enveloppe interne 9a de la paroi périphérique 5 qui est également l'enveloppe externe 9a du passage tubulaire 6. Une protubérance radiale et axiale 12 saille de l'enveloppe centrale externe 11a d'une distance comprise entre 0,4 et 0,6 fois le rayon de l'enveloppe centrale externe 11a, plus particulièrement est de l'ordre de 0,5 fois le rayon de l'enveloppe centrale externe 11a. Ou bien, une protubérance radiale et axiale 12 saille de l'enveloppe centrale externe 11a d'une distance égale ou voisine du rayon de l'enveloppe externe 9a du passage tubulaire 6. Un tronçon à protubérance radiale et axiale 10 a une longueur axiale comprise entre 1 fois et 1,5 fois, le diamètre de l'enveloppe centrale externe 11a. Selon une réalisation, la gaine 1 comporte un tronçon à protubérance radiale et axiale 10 par centimètre de longueur axiale de gaine 1, ou de l'ordre du centimètre de longueur axiale de gaine 1. Ces dimensions et valeurs sont données à titre exemplatif et illustratif et ne sont pas limitatives.

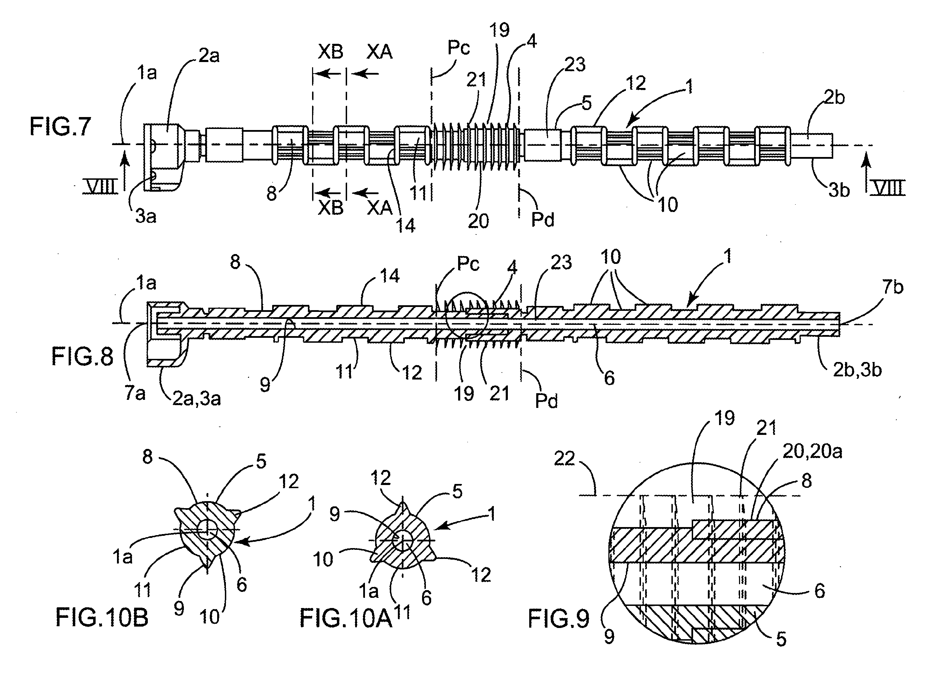

On se réfère maintenant plus spécialement à une seconde réalisation qui peut faire l'objet d'une variante d'exécution représentée sur les figures 7 à 10.

Dans cette variante d'exécution de la seconde réalisation, la paroi périphérique 5 comprend également un, ou éventuellement plusieurs, tronçons à aile annulaire 19 limité par deux plans transversaux Pc et Pd et une face périphérique externe 19a.

La face périphérique externe 19a comprend tout d'abord une partie centrale 20 inscrite dans une enveloppe centrale externe 20a de forme générale au moins sensiblement pseudo-cylindrique. Les deux parties centrales 11 et 20 sont au moins sensiblement dans le prolongement l'une de l'autre, comme les enveloppes 11a et 20a.

La face périphérique externe 19a comprend ensuite une pluralité d'ailes annulaires localisées axialement 21.

Les ailes annulaires localisées axialement 21 saillent de l'enveloppe centrale externe 20a. Considérée dans un plan transversal, chacune des ailes 21 a une forme annulaire.

Les ailes annulaires localisées axialement 21 sont inscrites dans une enveloppe extérieure 22. Les enveloppes extérieures 13 et 20 sont au moins sensiblement dans le prolongement l'une de l'autre.

La face périphérique externe 19 a comprend la ou les ailes annulaires localisées axialement 21 dans la, ou dans les, zones axiales de la gaine 1 pouvant être au contact d'une ou de pièces extrinsèques à la gaine 1. Ainsi, c'est le tronçon à aile annulaire 19 lui-même qui est localisé ainsi.

Toutefois, les exécutions qui viennent d'être décrites ne sont qu'exemplatives dans la mesure où la paroi périphérique 5 peut comprendre un ou plusieurs tronçons à aile annulaire 19, dans la mesure où les deux parties centrales 11 et 20, comme les enveloppes 11a et 20a, peuvent ne pas être dans le prolongement l'une de l'autre. Egalement dans la mesure où il peut être prévu une ou plusieurs ailes annulaires localisées axialement 21, celles-ci étant, selon les cas, identiques ou seulement analogues, notamment ayant ou non le même diamètre externe, de sorte que les enveloppes extérieures 13 et 20 peuvent ne pas être même au moins sensiblement dans le prolongement l'une de l'autre.

Par le qualificatif de « localisée axialement » appliqué à l'aile annulaire 21, l'on entend ici que l'aile annulaire 21 a une épaisseur ou longueur axiale très faible par rapport à la longueur axiale du tronçon à aile annulaire 19, entre les plans Pc et Pd. Ainsi, il est possible que l'aile annulaire 21, puisse être déformée élastiquement, de sorte à remplir au mieux sa fonction.

Par ailleurs, il peut être prévu que le bord externe des ailes annulaires 21 ou de certaines ailes annulaires 21 soit aminci en biseau ce qui facilite le contact avec la ou les pièces extrinsèques à la gaine 1 avec laquelle ou lesquelles elle est au contact, et facilite la déformation élastique des ailes 21.

Dans la variante d'exécution représentée, le tronçon à aile annulaire 19 est localisé dans la zone médiane de la gaine 1 entre ses parties d'extrémité 2a et 2b. Toutefois, cette exécution n'est qu'exemplative dans la mesure où le tronçon à aile annulaire 19peut être localisé autrement.

Dans la variante d'exécution représentée, le tronçon à aile annulaire 19 et un tronçon à protubérance radiale et axiale 10 sont attenants de façon continue. Toutefois, cette exécution n'est qu'exemplative dans la mesure où le tronçon à aile annulaire 19 peut être écarté d'un tronçon à protubérance radiale et axiale 10 ou peut, sans être attenant peut être seulement voisin par exemple au moins sensiblement adjacent.

Plus particulièrement, dans la variante d'exécution représentée, le tronçon à aile annulaire 19 est adjacent d'un côté avec un tronçon à protubérance radiale et axiale 10 et adjacent de l'autre côté avec un tronçon axial de gaine sans protubérance ou saillie 23. Toutefois, cette exécution n'est qu'exemplative.

Dans la variante d'exécution représentée, un tronçon à aile annulaire 19 a une longueur axiale de l'ordre d'une à trois fois la longueur axiale d'un tronçon à protubérance radiale et axiale 10. Ces dimensions et valeurs sont données à titre exemplatif et illustratif et ne sont pas limitatives.

Dans la variante d'exécution représentée, la gaine 1 comporte des tronçons à protubérance radiale et axiale 10 et un ou plusieurs tronçons à aile annulaire 19, sur toute sa longueur axiale ou sur une partie substantielle de sa longueur axiale, à l'exception le cas échéant de l'une et/ou de l'autre de ses deux parties d'extrémité 2a et 2b. Toutefois, cette exécution n'est qu'exemplative.

Il est entendu qu'une protubérance radiale et axiale 12, et/ou une protubérance annulaire 14, et/ou une aile annulaire 21 est pleine et formée par la matière de la paroi périphérique 5.

## Revendications

1. Gaine (1) monobloc, spécialement destinée à un arbre rotatif flexible, comportant une paroi périphérique (5) continue en, ou à base de, matière plastique, limitant un passage tubulaire (6) avec lequel est apte à coopérer l'arbre rotatif flexible, apte à pouvoir être courbée tout en résistant à la pliure, ladite paroi périphérique (5) comprenant des tronçons axiaux à protubérance (10), chacun limité par deux plans transversaux espacés (Pa, Pb) et une face périphérique externe (8) de paroi périphérique (5), **caractérisée par le fait qu'**un tronçon axial à protubérance (10) comprend une partie centrale (11) de face périphérique externe inscrite dans une enveloppe centrale externe (11a) de forme générale au moins sensiblement cylindrique, et, en continuité avec ladite partie centrale (11), des protubérances de la paroi périphérique (5) en continuité mutuelle saillant de l'enveloppe centrale externe (11a), et incluant :
▪ une protubérance annulaire localisée axialement (14), ou deux protubérances annulaires localisées axialement (14), située vers l'un des, ou situées sur chacun des, deux plans transversaux (Pa, Pb), et
▪ au moins une protubérance radiale et axiale (12) inscrite dans une enveloppe extérieure (13), s'étendant en direction générale axiale et dans un plan radial.

2. Gaine (1) selon la revendication 1, **caractérisée par le fait qu'**une protubérance annulaire localisée axialement (14) s'étend sur une longueur axiale inférieure à 0,15 fois, plus particulièrement inférieure à 0,1 fois, plus particulièrement égale ou de l'ordre de 0,08 fois, la longueur axiale du tronçon à protubérance radiale et axiale (10),

3. Gaine (1) selon l'une quelconque des revendications 1 et 2, **caractérisée par le fait qu'**une protubérance annulaire localisée axialement (14) est adjacente à un plan transversal (Pa, Pb).

4. Gaine (1) selon l'une quelconque des revendications 1 à 3, **caractérisée par le fait qu'**une protubérance annulaire localisée axialement (14) et une protubérance radiale et axiale (12) saillent radialement de l'enveloppe centrale externe (11a) sur une même distance ou sur des distances voisines.

5. Gaine (1) selon l'une quelconque des revendications 1 à 4, **caractérisée par le fait qu'**une protubérance radiale et axiale (12) est située dans et limitée à un secteur de l'enveloppe centrale externe (11a) qui comprend le plan radial, n'étant pas annulaire, ledit secteur ayant une ouverture d'angle inférieure à 45°, plus particulièrement inférieure à 30°.

6. Gaine (1) selon l'une quelconque des revendications 1 à 5, **caractérisée par le fait qu'**une protubérance radiale et axiale (12) considérée dans un plan transversal a une forme générale au moins sensiblement pseudo-triangulaire, plus particulièrement au moins pseudo-triangulaire équilatérale, avec un côté interne (15) vers l'enveloppe centrale externe (11a) et un somment externe (16) opposé au côté interne (15), formant un bord extérieur, plus particulièrement le bord le plus extérieur, de la face externe (10a) de la paroi périphérique (5) du tronçon à protubérance radiale et axiale (10).

7. Gaine (1) selon l'une quelconque des revendications 1 à 6, **caractérisée par le fait qu'**une protubérance radiale et axiale (12) considérée dans un plan transversal a une forme générale au moins sensiblement pseudo-triangulaire avec deux côtés externes (17) arrondis, plus particulièrement concaves, et/ou avec des sommets (16, 18) arrondis, plus particulièrement un sommet externe (16) concave et des sommets internes (18) convexes de raccordement tangentiel avec la partie centrale (11) concave de la face externe de la paroi périphérique (5) du tronçon à protubérance radiale et axiale (10).

8. Gaine (1) selon l'une quelconque des revendications 1 à 7, **caractérisée par le fait qu'**un tronçon à protubérance radiale et axiale (10) comporte au moins deux, plus particulièrement trois ou au moins trois, protubérances radiales et axiales (12) analogues, plus particulièrement identiques ou sensiblement identiques, dans au moins deux, plus particulièrement en trois ou au moins trois, plans radiaux, régulièrement écartés angulairement les uns des autres ou au moins sensiblement régulièrement écartés angulairement les uns des autres.

9. Gaine (1) selon l'une quelconque des revendications 1 à 8, **caractérisée par le fait qu'**au moins deux tronçons à protubérance radiale et axiale (10), plus particulièrement tous les tronçons à protubérance radiale et axiale (10) ou une partie substantielle d'entre eux, sont voisins l'un de l'autre ou les uns des autres de sorte à être au moins sensiblement adjacents, plus particulièrement de sorte à être attenants de façon continue.

10. Gaine (1) selon l'une quelconque des revendications 1 à 9, **caractérisée par le fait que** deux tronçons à protubérance radiale et axiale (10) voisins, plus particulièrement attenants, sont disposés par rapport à l'axe (1 a) de la gaine (1) avec deux orientations décalées angulairement, de sorte que leurs protubérances radiales et axiales (12) soient décalées angulairement, une protubérance radiale et axiale (12) d'un tronçon à protubérance radiale et axiale (10) étant située en regard de la zone médiane entre deux protubérances radiales et axiales (12) du tronçon à protubérance radiale et axiale (10) voisin, plus particulièrement attenant.

11. Gaine (1) selon l'une quelconque des revendications 1 à 10, **caractérisée par le fait qu'**une protubérance radiale et axiale (12) saille de l'enveloppe centrale externe (11a) d'une distance comprise entre 0,4 et 0,6 fois le rayon de l'enveloppe centrale externe (11a), plus particulièrement est de l'ordre de 0,5 fois le rayon de l'enveloppe centrale externe (11 a) et/ou d'une distance égale ou voisine du rayon de l'enveloppe externe (9a) du passage tubulaire (6).

12. Gaine (1) selon l'une quelconque des revendications 1 à 11, **caractérisée par le fait que** la paroi périphérique (5) comprend également au moins un tronçon axial de gaine à aile annulaire (19), limité par deux plans transversaux et une face périphérique externe (19a) comprenant :
▪ une partie centrale (20) inscrite dans une enveloppe centrale externe (20a) de forme générale au moins sensiblement pseudo-cylindrique,
▪ et au moins dans la, ou dans les, zones axiales de la gaine (1) pouvant être au contact d'une ou de pièces extrinsèques à la gaine (1), au moins une aile annulaire localisée axialement (21), plus particulièrement une pluralité d'ailes (21), saillant de l'enveloppe centrale externe (19a) et qui, considérée dans un plan transversal, a une forme annulaire, la ou les ailes annulaires (21) étant inscrites dans une enveloppe extérieure (22).

13. Gaine (1) selon l'une quelconque des revendications 1 à 12, **caractérisée par le fait qu'**elle comporte des tronçons de gaine à protubérance radiale et axiale (10), et le cas échéant un ou plusieurs tronçons à aile annulaire (19), sur toute sa longueur axiale ou sur une partie substantielle de sa longueur axiale, à l'exception le cas échéant de l'une et/ou de l'autre de ses deux parties d'extrémité(2a et 2b).

14. Dispositif de transmission d'un mouvement de rotation comprenant un arbre rotatif flexible coopérant avec une gaine (1) selon l'une quelconque des revendications 1 à 13.

15. Dispositif de réglage de la position d'un siège, plus particulièrement un siège de véhicule, comprenant :
▪ une armature de siège supportée par une structure de sorte à pouvoir coulisser le long d'au moins une direction de réglage sur une certaine course de réglage et supportant au moins une roue dentée montée de manière à pouvoir pivoter autour de son tourillon d'axe orthogonal à la direction de réglage et à laquelle est associé, le cas échéant, un réducteur,
▪ au moins une glissière à crans de réglage apte à être fixée à la structure, parallèlement à la direction de réglage et ayant une longueur au moins égale à la course de réglage, les dents de la roue dentée coopérant avec les crans de la glissière,
▪ au moins un moteur électrique supporté par la structure ou l'armature de siège ayant un arbre de sortie apte à pouvoir pivoter, et auquel sont associés des moyens de commande du moteur et du réglage de la position du siège,
▪ un espace libre de forme pouvant être tourmentée, de taille transversale pouvant être très restreinte dans certaines zones, et d'une taille longitudinale pouvant atteindre, voire dépasser, une vingtaine de centimètres, situé entre l'arbre de sortie du moteur électrique et le tourillon de la roue dentée,
▪ au moins un tel dispositif de transmission d'un mouvement de rotation, disposé dans cet espace libre, comprenant un arbre rotatif flexible et une gaine (1) selon la revendication 14, l'une des extrémités de l'arbre rotatif flexible étant associée fonctionnellement rigidement à l'arbre de sortie du moteur et l'autre des extrémités de l'arbre rotatif flexible étant associée fonctionnellement rigidement au tourillon de la roue dentée, le cas échéant, au réducteur qui lui est associé.

## Patentansprüche

1. Einstückige Hülse (1), die speziell für eine flexible Radialwelle bestimmt ist, umfassend eine durchgehende Umfangswand (5) aus oder auf Basis von Kunststoff, die einen röhrenförmigen Durchgang (6) begrenzt, mit dem die flexible Radialwelle zusammenwirken kann, die geeignet ist, gebogen zu werden, wobei sie falzbeständig ist, wobei die Umfangswand (5) Axialabschnitte mit Vorsprung (10), die jeweils von zwei beabstandeten Querebenen (Pa, Pb) begrenzt sind, und eine äußere Umfangsfläche (8) der Umfangswand (5) umfasst, **dadurch gekennzeichnet, dass** ein Axialabschnitt mit Vorsprung (10) einen zentralen Teil (11) einer äußeren Umfangsfläche, der in eine äußere zentrale Hülle (11a) von zumindest im Wesentlichen zylindrischer allgemeiner Form umschrieben ist und, in Ausrichtung mit dem zentralen Teil (11), Vorsprünge der Umfangswand (5) in wechselseitiger Ausrichtung umfasst, die über die äußere zentrale Hülle (11a) hinausragen, und umfassend:
- einen axial lokalisierten ringförmigen Vorsprung (14) oder zwei axial lokalisierte ringförmige Vorsprünge (14), die zu einer der oder auf jeder der beiden Querebenen (Pa, Pb) angeordnet sind, und
- mindestens einen radialen und axialen Vorsprung (12), der von einer äußeren Hülle (13) umschrieben ist und sich in allgemeiner axialer Richtung und in einer Radialebene erstreckt.

2. Hülse (1) nach Anspruch 1, **dadurch gekennzeichnet, dass** sich ein axial lokalisierter ringförmiger Vorsprung (14) auf einer axialen Länge erstreckt, die 0,15-mal, insbesondere 0,1-mal kleiner als, insbesondere gleich wie oder ungefähr 0,08-mal die axiale Länge des Abschnitts mit radialem und axialem Vorsprung (10) ist.

3. Hülse (1) nach einem der Ansprüche 1 und 2, **dadurch gekennzeichnet, dass** ein axial lokalisierter ringförmiger Vorsprung (14) an eine Querebene (Pa, Pb) angrenzt.

4. Hülse (1) nach einem der Ansprüche 1 bis 3, **dadurch gekennzeichnet, dass** ein axial lokalisierter ringförmiger Vorsprung (14) und ein radialer und axialer Vorsprung (12) radial über die äußere zentrale Hülle (11a) über eine selbe Distanz oder über ähnliche Distanzen hinausragen.

5. Hülse (1) nach einem der Ansprüche 1 bis 4, **dadurch gekennzeichnet, dass** ein radialer und axialer Vorsprung (12) in einem Sektor der äußeren zentralen Hülle (11a), der die Radialebene umfasst, angeordnet und auf diesen begrenzt ist, wobei er nicht ringförmig ist, wobei dieser Sektor eine Öffnung mit einem Winkel unter 45°, insbesondere unter 30°, aufweist.

6. Hülse (1) nach einem der Ansprüche 1 bis 5, **dadurch gekennzeichnet, dass** ein radialer und axialer Vorsprung (12), betrachtet in einer Querebene, eine zumindest im Wesentlichen pseudo-dreieckige, insbesondere zumindest pseudo-gleichseitig-dreieckige allgemeine Form hat, mit einer Innenseite (15) zur äußeren zentralen Hülle (11a) und einer äußeren Spitze (16) gegenüber der Innenseite (15), die einen äußeren Rand, insbesondere den äußersten Rand der Außenseite (10a) der Umfangswand (5) des Abschnitts mit radialem und axialem Vorsprung (10) bildet.

7. Hülse (1) nach einem der Ansprüche 1 bis 6, **dadurch gekennzeichnet, dass** ein radialer und axialer Vorsprung (12), betrachtet in einer Querebene, eine zumindest im Wesentlichen pseudo-dreieckige allgemeine Form mit zwei abgerundeten, insbesondere konkaven Außenseiten (17) und/oder mit abgerundeten Spitzen (16, 18), insbesondere einer konkaven äußeren Spitze (16) und konvexen inneren Spitzen (18) für den tangentialen Anschluss an den konkaven zentralen Teil (11) der Außenseite der Umfangswand (5) des Abschnitts mit radialem und axialem Vorsprung (10) aufweist.

8. Hülse (1) nach einem der Ansprüche 1 bis 7, **dadurch gekennzeichnet, dass** ein Abschnitt mit radialem und axialem Vorsprung (10) mindestens zwei, insbesondere drei oder mindestens drei analoge, insbesondere identische oder im Wesentlichen identische radiale und axiale Vorsprünge (12) in mindestens zwei, insbesondere in drei oder mindestens drei Radialebenen umfasst, die zueinander im Winkel regelmäßig beabstandet oder zueinander zumindest im Wesentlichen im Winkel regelmäßig beabstandet sind.

9. Hülse (1) nach einem der Ansprüche 1 bis 8, **dadurch gekennzeichnet, dass** mindestens zwei Abschnitte mit radialem und axialem Vorsprung (10), insbesondere alle Abschnitte mit radialem und axialem Vorsprung (10) oder ein wesentlicher Teil von ihnen nebeneinander angeordnet sind, so dass sie zumindest im Wesentlichen aneinandergrenzen, insbesondere dass sie kontinuierlich aneinander anliegen.

10. Hülse (1) nach einem der Ansprüche 1 bis 9, **dadurch gekennzeichnet, dass** zwei angrenzende, insbesondere aneinander anliegende Abschnitte mit radialem und axialem Vorsprung (10) in Bezug zur Achse (1 a) der Hülse (1) mit zwei im Winkel versetzten Ausrichtungen angeordnet sind, so dass ihre radialen und axialen Vorsprünge (12) im Winkel versetzt sind, wobei ein radialer und axialer Vorsprung (12) eines Abschnitts mit radialem und axialem Vorsprung (10) gegenüber der Mittelzone zwischen zwei radialen und axialen Vorsprüngen (12) des angrenzenden, insbesondere anliegenden Abschnitts mit radialem und axialem Vorsprung (10) angeordnet ist.

11. Hülse (1) nach einem der Ansprüche 1 bis 10, **dadurch gekennzeichnet, dass** ein radialer und axialer Vorsprung (12) über die äußere zentrale Hülle (11a) um eine Distanz zwischen 0,4- und 0,6-mal den Radius der äußeren zentralen Hülle (11a), insbesondere ungefähr 0,5-mal den Radius der äußeren zentralen Hülle (11a) und/oder um eine Distanz gleich oder ähnlich dem Radius der äußeren Hülle (9a) des röhrenförmigen Durchgangs (6) hinausragt.

12. Hülse (1) nach einem der Ansprüche 1 bis 11, **dadurch gekennzeichnet, dass** die Umfangswand (5) auch mindestens einen axialen Hülsenabschnitt mit ringförmigem Schenkel (19) umfasst, der durch zwei Querebenen und eine äußere Umfangsfläche (19a) begrenzt ist, umfassend:
- einen zentralen Teil (20), der in eine äußere zentrale Hülle (20a) von zumindest im Wesentlichen pseudo-zylindrischer allgemeiner Form umschrieben ist,
- und mindestens in der oder den Axialzonen der Hülse (1), die mit einem oder mehreren äußeren Teilen der Hülse (1) in Kontakt sein können, zumindest einen axial lokalisierten ringförmigen Schenkel (21), insbesondere eine Vielzahl von Schenkeln (21), die über die äußere zentrale Hülle (19a) hinausragen, und die, betrachtet in einer Querebene, eine Ringform haben, wobei der oder die ringförmigen Schenkel (21) von einer äußeren Hülle (22) umschrieben sind.

13. Hülse (1) nach einem der Ansprüche 1 bis 12, **dadurch gekennzeichnet**, das sie Hülsenabschnitte mit radialem und axialem Vorsprung (10) und gegebenenfalls einen oder mehrere Abschnitte mit ringförmigem Schenkel (19) auf ihrer gesamten axialen Länge oder auf einem wesentlichen Teil ihrer axialen Länge umfasst, gegebenenfalls mit Ausnahme des einen und/oder des anderen ihrer beiden Endteile (2a und 2b).

14. Vorrichtung zur Übertragung einer Drehbewegung, umfassend eine flexible Radialwelle, die mit einer Hülse (1) nach einem der Ansprüche 1 bis 13 zusammenwirkt.

15. Vorrichtung zur Einstellung der Position eines Sitzes, insbesondere eines Kraftfahrzeugsitzes, umfassend:
- einen Sitzbeschlag, der von einer Struktur getragen wird, um entlang mindestens einer Einstellrichtung auf einer gewissen Einstellstrecke gleiten zu können, und der mindestens ein Zahnrad trägt, das derart montiert ist, dass es um seinen Drehzapfen mit einer Achse orthogonal zur Einstellrichtung schwenken kann, und mit dem gegebenenfalls ein Untersetzungsgetriebe verbunden ist,
- mindestens eine Gleitschiene mit Einstellkerben, die geeignet ist, an der Struktur parallel zur Einstellrichtung befestigt zu werden, und die eine Länge mindestens gleich der Einstellstrecke aufweist, wobei die Zähne des Zahnrades mit den Kerben der Gleitschiene zusammenwirken,
- mindestens einen Elektromotor, der von der Struktur oder dem Sitzbeschlag getragen wird, umfassend eine Ausgangswelle, die geeignet ist, schwenken zu können, und mit der Mittel zur Steuerung des Motors und der Einstellung der Sitzposition verbunden sind,
- einen Freiraum mit einer Form, die bewegt werden kann, mit einem Querausmaß, das in gewissen Zonen sehr eingeschränkt sein kann, und mit einem Längsausmaß, das ungefähr zwanzig Zentimeter erreichen bzw. überschreiten kann, der sich zwischen der Ausgangswelle des Elektromotors und dem Drehzapfen des Zahnrades befindet,
- mindestens eine solche Vorrichtung zur Übertragung einer Drehbewegung, die in diesem Freiraum angeordnet ist, umfassend eine flexible Radialwelle und eine Hülse (1) nach Anspruch 14, wobei eines der Enden der flexiblen Radialwelle funktional starr mit der Ausgangswelle des Motors verbunden ist, und das andere der Enden der flexiblen Radialwelle funktional starr mit dem Drehzapfen des Zahnrades, gegebenenfalls mit dem mit diesem verbundenen Untersetzungsgetriebe, verbunden ist.

## Claims

1. One-piece sheath (1), specifically intended for a flexible rotary shaft, comprising a continuous peripheral wall (5) made of or based on plastic, bounding a tubular passage (6) with which the flexible rotary shaft is able to cooperate, able to be curved but resistant to kinking, said peripheral wall (5) comprising axial segments with protuberances (10), each bounded by two transverse planes (Pa, Pb) spaced apart from each other and an outer peripheral face (8) of peripheral wall (5), **characterized by** the fact that an axial segment with protuberances (10) comprises a central part (11) having an outer peripheral face inscribed inside an external central enveloppe (11 a) that is at least substantially cylindrical in shape, and, continuous with said central part (11), protuberances of the peripheral wall (5) projecting from the external central enveloppe (11 a) so as to be mutually continuous, and including:
▪ an axially located annular protuberance (14), or two axially located annular protuberances (14), located near one of, or located on each of, the two transverse planes (Pa, Pb), and
▪ at least one radial and axial protuberance (12) inscribed inside an external enveloppe (13), extending generally in the axial direction and in a radial plane.

2. Sheath (1) according to claim 1, wherein an axially located annular protuberance (14) extends for an axial length of less than 0.15 times, more particularly less than 0.1 times, more particularly equal to or about 0.08 times, the axial length of the segment with radial and axial protuberances (10),

3. Sheath (1) according to any one of claims 1 and 2, wherein an axially located annular protuberance (14) is adjacent to a transverse plane (Pa, Pb).

4. Sheath (1) according to any one of claims 1 to 3, wherein an axially located annular protuberance (14) and a radial and axial protuberance (12) project radially from the external central enveloppe (11a) over a same distance or over two similar distances.

5. Sheath (1) according to any one of claims 1 to 4, wherein a radial and axial protuberance (12) is located within and confined to a sector of the external central enveloppe (11a) which comprises the radial plane, not being annular, said sector having a central angle of less than 45°, more particularly less than 30°.

6. Sheath (1) according to any one of claims 1 to 5, wherein a radial and axial protuberance (12) when considered in a transverse plane has a general shape that is at least substantially pseudo-triangular, more particularly at least equilateral pseudo-triangular, with an internal side (15) towards the external central enveloppe (11a) and an external apex (16) opposite the internal side (15), forming an outer edge, more particularly the outermost edge, of the external face (10a) of the peripheral wall (5) of the segment with radial and axial protuberances (10).

7. Sheath (1) according to any one of claims 1 to 6, wherein a radial and axial protuberance (12) considered in a transverse plane has a general shape that is at least substantially pseudo-triangular with two rounded external sides (17), more particularly concave, and/or with rounded apexes (16, 18), more particularly a concave external apex (16) and convex internal apexes (18) for tangentially connecting with the concave central part (11) of the external face of the peripheral wall (5) of the segment with radial and axial protuberances (10).

8. Sheath (1) according to any one of claims 1 to 7, wherein a segment with radial and axial protuberances (10) comprises at least two, more particularly three or at least three similar axial and radial protuberances (12), more particularly identical or substantially identical, in at least two, more particularly in three or at least three radial planes, regularly spaced apart from each other angularly or at least substantially regularly spaced apart from each other angularly.

9. Sheath (1) according to any one of claims 1 to 8, wherein at least two segments with radial and axial protuberances (10), more particularly all segments with radial and axial protuberances (10) or a substantial portion thereof, are neighboring one another so as to be at least substantially adjacent, more particularly so as to be continuously adjoining.

10. Sheath (1) according to any one of claims 1 to 9, wherein two neighboring segments with radial and axial protuberances (10), particularly two adjoining ones, are arranged relative to the axis (1 a) of the sheath (1) in two angularly offset orientations, such that their radial and axial protuberances (12) are angularly offset, a radial and axial protuberance (12) of a segment with radial and axial protuberances (10) being positioned facing the median area between two radial and axial protuberances (12) of the neighboring, particularly adjoining, segment with radial and axial protuberances (10).

11. Sheath (1) according to any one of claims 1 to 10, wherein a radial and axial protuberance (12) projects from the external central enveloppe (11 a) by a distance of between 0.4 and 0.6 times the radius of the external central enveloppe (11 a), particularly about 0.5 times the radius of the external central enveloppe (11 a) and/or by a distance close to or equal that of the radius of the external enveloppe (9a) of the tubular passage (6).

12. Sheath (1) according to any one of claims 1 to 11, wherein the peripheral wall (5) also comprises at least one axial sheath segment with annular flanges (19), said segment being bounded by two transverse planes and an outer peripheral face (19a), comprising:
▪ a central part (20) inscribed inside an external central enveloppe (20a) of a general shape that is at least substantially pseudo-cylindrical,
▪ and, at least in the axial area(s) of the sheath (1) that may be in contact with one or more extrinsic parts of the sheath (1), at least one axially located annular flange (21), particularly a plurality of flanges (21), projecting from the external central enveloppe (19a) and when considered in a transverse plane having an annular shape, the annular flange or flanges (21) being inscribed inside an external enveloppe (22).

13. Sheath (1) according to any one of claims 1 to 12, wherein it comprises sheath segments with radial and axial protuberances (10), and where appropriate one or more segments with annular flanges (19), along its entire axial length or along a substantial portion of its axial length, with the possible exception of one and/or the other of its two end portions (2a and 2b).

14. Device for transmitting rotational movement, comprising a flexible rotary shaft cooperating with a sheath (1) according to any one of claims 1 to 13.

15. Device for adjusting the position of a seat, particularly a vehicle seat, comprising:
▪ a seat frame supported by a structure enabling it to slide in at least one adjustment direction along a certain adjustment path and supporting at least one toothed wheel mounted to be pivotable about its shaft on an axis orthogonal to the adjustment direction and with which is associated, where appropriate, a reduction gear,
▪ at least one notched adjustment slide suitable for attachment to the structure, parallel to the adjustment direction and having a length at least equal to the adjustment path, the teeth of the wheel engaging with the notches of the slide,
▪ at least one electric motor supported by the structure or the frame of the seat, having an output shaft adapted to be pivotable, and with which are associated means for controlling the motor and for adjusting the position of the seat,
▪ free space of a shape that may be irregular, its transverse size able to be very limited in certain areas, and its longitudinal size able to reach or possibly exceed twenty centimeters,
positioned between the output shaft of the electric motor and the shaft of the toothed wheel,
▪ at least one such device for transmitting rotational movement, arranged within this free space, comprising a flexible rotary shaft and a sheath (1) as claimed in claim 14, one end of the flexible rotary shaft being operatively associated in a rigid manner with the output shaft of the motor and the other end of the flexible rotary shaft being operatively associated in a rigid manner with the shaft of the toothed wheel, where appropriate, with the reduction gear associated therewith.
